# EUROPEAN PATENT APPLICATION

(11) **EP 2 863 357 A1**
(43) Date of publication of application: **22.04.2015**
(21) Application number: 14179686.2
(22) Date of filing: 04.08.2014
(51) Int. Cl.: G06Q 40/02, G06Q 40/08

(54) **Method of automating a business loan life cycle**

(30) Priority: 17.10.2013 US 201361891940 P
(71) Applicant: Orange Money Ezbob Ltd, London N7 9DP (GB)
(72) Inventor: Guriel, Tomer, London, N7 9DP (GB); Perlstein, Sharone, London, N7 9DP (GB)
(74) Representative: Gallo, Luca

(57) **Abstract**

A method and computer-implemented method for loan consideration including the steps of: (a) obtaining financial data regarding a loan requester from a plurality of digital media sources, the financial data including tax data; (b) analyzing the financial data to make an affordability and risk assessment (AARA) for granting a loan to the loan requester, the AARA including calculating, at least from the tax data, a forecasted amount of unencumbered capital to be available over at least a portion of a term of said loan (i.e. by calculating an amount of historical unencumbered cash flow, which is then forecasted by the system into the future) after capital expenditure is estimated and current outstanding loan/debt repayments are deducted from the estimate; and (c) deciding whether to grant the loan based on the AARA.

## Description

### FIELD AND BACKGROUND OF THE INVENTION

Loan approvals are arduous and time consuming procedure. Generally, lenders have a questionnaire and a list of documents which the loan requester must supply. A requester of a loan must typically provide a business plan, financial forecasts, and other financial information (e.g. audited financials, printouts or soft copies of bank statements over the preceding three months/twelve months, tax returns, etc.) which in itself requires time and effort on behalf of the both the requester and the lender of a loan, and adds not a small amount of frustration and costs, to the loan process. It is typical for the lender to require additional information and to have additional questions which can take several calls, emails and/or meetings before the loan application is considered complete enough to send to the underwriter or the credit committee.

When the loan requester is a corporation and not a sole trader, a lender requires the gathering of additional physical information such as the company incorporation documents, shareholder ledgers and in addition (sole trader or company) financial statements, tax filings, and business plans and forecasts.

Very often the information collected by the loan provider is provided by the loan requestor. This process is time consuming for both the loan requester and the loan provider. In addition, the information provided by the loan requester may not be authentic (fraud) or may be incomplete (e.g. missing a signature, missing needed documentation to make an underwriting decision etc.). In the end, a loan officer/underwriter has to wade through this mountain of data and to make a decision of whether to approve, deny or change the details of the loan. The above described process can be detrimental to a loan requester that requires the funds for business purposes. In addition, the manual process of gathering information is costly for the lender. The lender may all together reject loan requests under a certain threshold as the lender would be loosing money on such loans.

Generally, a bank / lender will look at a number of aspects of a business in order to determine whether to grant a loan or not. Some of these aspects can include, for example, company details, shareholders details, financial statements, recent financial data, credit report on business, and shareholders and security available etc. Each bank may have a different policy and procedure regarding precisely what information is needed and what data is taken into consideration when making a loan decision.

When the loan request is passed on to the underwriter / credit committee it is typical that both the loan requester and the account manager / loan officer for the loan provider is left completely in the dark and with a great amount of uncertainty as to a) when the decision will be made b) whether the loan request will be approved c) what amount will be approved and d) what the terms of the loan offered will be.

### DEFINITIONS

Request Form - The request form, as referred to herein, is the information package in which the user provides the system with information including, but not limited to, personal and business information, and in particular, financial information, profile data, the desired loan amount, and the like. The package of information or set of data can be transmitted in any way known in the art, e.g. an online form or questionnaire, a letter, an electronic communication (email, chat feature, sms, messaging platform etc.), verbally (e.g. responding to a questionnaire over the phone, in person, over a voice and/video communication platform etc.), for the purpose of an individual, an online business, a brick and mortar business, a partnership etc. In a preferred embodiment described herein, the request form is an online form.

Profile Data - personal or business profile data includes personal details, business details, bank account details, user names and passwords for various online accounts (e.g. tax authority account, payment provider such as PayPoint™, Credorax™, Paypal™ account, bank account etc.), shareholder details, directorship details, financial data, tax returns, tax filings etc.

Predetermined, Systemized Analysis Process - One of the essential elements of the invention includes an analysis process which systematically gathers at least a large portion of the needed data from various data sources. Primarily, important data is extracted from the tax filing in a new and unique manner. The process includes a set of rules and algorithms for locating and extracting specific data or data sets, largely based on information included in the profile data of the request form.

Each region has different [online] data sources. For example, tax forms in the U.S.A. differ greatly from those used in the U.K. In fact, even in one country, different formats may be used in different regions (e.g. the format of a particular tax form may differ from state to state in the U.S.A.). Therefore, for each region, the systematic analysis process has a predetermined set of rules that may or may not differ from region to region. Even though the process is predetermined, it may be updated from time to time by the system administrator or management. The algorithms or rules may be improved or replaced. The various online sources or resources may become unavailable or new sources may be introduced. Therefore, the term 'predetermined' is given a flexible interpretation such that the process is considered predetermined on the one hand, but on the other hand the process can also be updated and changed, for example, as discussed above.

Patent Nomenclature:

Digital media - the term 'digital media' and variations thereof refer to any data which can be stored on a computer. For example, digital media includes scanned documents (e.g. bank statements, tax filings, etc.), webpages, database entries, etc.

Online / digital media sources or resources - refers to an entity which provides or stores or includes therein digital/electronic data. Examples include a computer file of a scanned document such as a bank statement or tax filing form, a website, a network entity, a computer connected to a network such as the Internet.

### SUMMARY OF THE INVENTION

The present invention successfully addresses the shortcomings of the presently known methods of approving loans/business funding by providing a method and system that works online or over a network for extracting pertinent information about the requesting party (hereinafter 'requester') in real-time and applying innovative logic / a predetermined, systemized analysis process to the extracted information in order to ascertain viability of the requester to repay the loan, knowledge of which allows the lending party (hereinafter 'lender') to decide whether to approve or deny the loan request.

Whereas lending institutions such as banks request hard copies of documents and manually process these documents, the immediate innovative system and method uses automation to both retrieve and process the data. Instead of requesting a physical bank recent trial balance or bank account historical transactions the system allows a Loan Requestor to link his bank account electronically to his loan application as well as link or upload ongoing tax filings (sales tax/ tax returns/ payroll reporting in the U.S.). When connected directly to the online banking and tax records of the loan requester, the system uses an automated process to analyze transactional data without human intervention or interpretation. Manually uploaded data can also be automatically analyzed and processed.

The system also makes the funding offer and the terms to the loan requester electronically (i.e. over a communications network), presents the loan requester with an electronic loan agreement to sign digitally, allows the loan requester to put in a debit card or other repayment method for automated repayment, activates the loan, transfers the loan amount to the loan requesters business account and offers the loan requester a personal account within the system where he/she can view or review all payments, payment dates, loan agreements etc.

The immediate system creates a paradigm shift in loan assessment. In the UK, for example, studies have shown that the operating costs of originating, onboarding, and gathering of data takes weeks to process and costs a lender over £1,655. In addition, the total cost to the lender - which includes origination, onboarding, gathering of data, activation, monitoring and collection - can cost a financial establishment anywhere between £2200 and £4500 per loan. The immediate system, through the automation, processing, dashboard etc., provides a loan assessment in minutes, not weeks, saving a financial establishment that lends money thousands of Pounds or Dollars in operating costs. By reducing the overhead, each loan application can be assessed in an equal manner, no matter how big or small the loan is. Therefore, loans below a given threshold that would be denied by a lending establishment as being non-profitable, can be considered using the immediate system.

According to the present invention there is provided a method for implementing a loan life-cycle, the method including the steps of: (a) obtaining financial data regarding a loan requester from a plurality of digital media sources, the financial data including tax data; (b) analyzing the financial data to make an affordability and risk assessment (AARA) for granting a loan to the loan requester, the AARA including calculating, at least from the tax data, a forecasted amount of unencumbered capital to be available over at least a portion of a term of said loan (i.e. by calculating an amount of historical unencumbered cash flow, which is then forecasted by the system into the future) after capital expenditure is estimated and current outstanding loan/debt repayments are deducted from the estimate; and (c) deciding whether to grant the loan based on the AARA.

According to further features in preferred embodiments of the invention described below the plurality of digital media sources includes an online tax authority source, wherein the financial data is gathered from the tax authority source by parsing data stored at the tax authority source.

According to still further features in the described preferred embodiments the online tax authority source includes an online tax authority user account belonging to the loan requested.

According to still further features the plurality of digital media sources includes scanned documents.

According to still further features the step of obtaining financial data includes extracting field-specific data from the scanned documents.

According to still further features the financial data includes data relating to a net worth of a property belonging to the loan requester or directors/stakeholders of loan requester.

According to still further features the data relating to the net worth of the property is obtained from an online property ownership service, an online credit service and an online property valuation service.

According to still further features the AARA includes calculating the net worth of the property at least by receiving a purchase price from the property ownership service, details of an outstanding mortgage from the online credit service and a value of the property from the online property valuation service.

According to still further features the AARA further includes calculating a loan amount to offer the loan requester based on the unencumbered capital and the net worth of the loan requester's directors/shareholders property, wherein the net worth of the property is used to calculate the value of a personal guarantee for the loan.

According to still further features the method further includes the step of: (d) displaying selected gathered and processed data on an online dashboard, wherein the selected data includes at least a minimum amount of information needed to make a manual loan approval decision by an underwriter.

According to still further features the method further includes the step of: (d) monitoring financial activity of said loan requester over at least said portion of said term of said loan, said monitoring including monitoring said [electronic] tax data and/or bank account activity on an ongoing basis.

According to still further features the unencumbered capital is further calculated by forecasting operational expenditure, including payroll, over at least the portion of the term of the loan.

According to another embodiment there is provided a computer-implemented method for implementing a loan life-cycle over a communications network, the method including the steps of: (a) obtaining financial data regarding a loan requester transmitted over the communications network from a plurality of digital media sources, the financial data including tax data; (b) analyzing the financial data to make an affordability and risk assessment (AARA) for granting a loan to the loan requester, the AARA including calculating, at least from the tax data (and credit bureau), a forecasted amount of unencumbered capital to be available over at least a portion of a term of said loan (i.e. by calculating an amount of historical unencumbered cash flow, which is then forecasted by the system into the future) after capital expenditure is estimated and current outstanding loan/debt repayments are deducted from the estimate; and (c) deciding whether to grant the loan based on the AARA, and at least the analyzing is performed by a processor.

According to still further features the method further includes the step of: (d) offering a loan size; (e) receiving a loan size selection; (f) receiving an electronically signed loan agreement; and (e) transferring funds electronically; wherein all the method steps are performed automatically.

### BRIEF DESCRIPTION OF THE DRAWINGS

Various embodiments are herein described, by way of example only, with reference to the accompanying drawings, wherein:
FIG. 1 is a block diagram depicting various entities on a network;
FIG. 2 is a flow chart of an exemplary loan request assessment process of the immediate invention;
FIG. 3 is a screen shot of an exemplary page of an online form;
FIG. 4 is a screen shot of an exemplary page of an exemplary online application form;
FIG. 4a-4d are screen shots of exemplary pages of an exemplary online application form;
FIG. 5 is a flow chart of data capture per corporation type, in one exemplary region;
FIG. 6 is a flow diagram of an exemplary loan consideration high level process;
FIG. 7 is a block diagram depicting various named entities on a network;
FIG. 8 is a block diagram illustrating components of a digital computer that can be used to implement the methods described herein, according to an embodiment.

### DESCRIPTION OF THE PREFERRED EMBODIMENTS

What follows is an outline of the innovative method for loan consideration, activation, collections, and monitoring. It is made clear that the method, system and process can similarly be applied to loans for individuals as well as businesses and conglomerates.

The nature of the current invention allows for various and varied modes of implementation, and as such, it is to be understood that any specific methods, object or entity mentioned herein is to understood as merely exemplary, and as a preferred implementation of the method, but not limiting.

In one configuration, the necessary financial information/data is provided to the system in a manual fashion (e.g. the loan requester or management uploads financial files to the system or scans and emails the documents to the lender who then keys in the details into the Loan Requestor application).

In a further configuration, the process of extracting at least some of the financial information is automated (e.g. a tax form can be uploaded by the loan requester and automatically scanned by the system to extract necessary data). The data is processed by the system algorithms to determine affordability, net worth etc.

In a still further configuration, the at least part of the process for gathering data is performed by a computer in communication with a computer communications network. Exemplarily, the lender system accesses the relevant data over the communications network and automatically extracts information from another or other computers connected to the computer communications network. Preferably, the data gather process is effected in real-time (e.g. during or right after the online application process). Preferably, the processing algorithms are applied to the data in an automated fashion. One or more of the aforementioned configuration may be applied in a single process.

The principles and operation of a system and method for sourcing and analyzing financial information automatically online, according to the present invention, may be better understood with reference to the drawings and the accompanying description.

In one preferred embodiment of the system, the Requester fills out an online application provided on the Lender website. The Lender computer system uses the applicant information to gather various data/ information from online sources (e.g. the exemplary services discussed above). Throughout the application process, the lender system gathers, processes, cross-references and verifies the application data and, in some cases, alerts the system to inconsistencies in the imported or gathered data. If inconsistencies exist, the system automatically alerts both the loan requester and the lender. The loan requester is instructed to supply additional information such as a proof of address, a utility bill or other data that will explain the inconsistency at hand. The requester is then able to rectify the inconsistency, e.g. by emailing or uploading data which is then cleared by the lender manually.

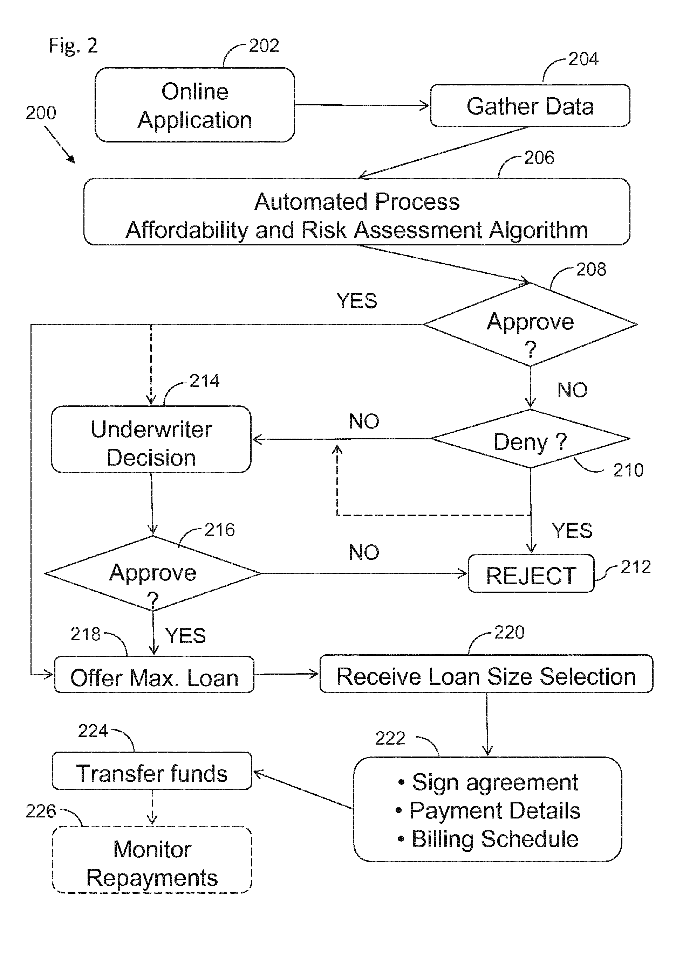

The loan consideration method is an electronic/online process including a number of general stages. Figure 2 is a flow chart of an exemplary loan request assessment process **200** of the immediate invention. The first stage (online application) includes the step wherein a requester sends an application to the lender, preferably online and the lender receives the application data (step **202**). Part of the online application includes providing necessary documentation, once again preferably online (e.g. linking data sources, uploading documents to the system, or emailing documents etc.). Some documentation/ information may be available in databases that are accessible online. Some of the data that is available online, can only be accessed with the approval of the loan requestor. Such data can only be accessed by using user identification (e.g. username and password) or with prior approval of the loan requester. Part of the online application process therefore includes receiving 'access data' from the requester, i.e. data that allows the lender system to accesses the secured data (e.g. the user provides a username and password to the business bank account).

The second stage (Gathering / Obtaining Information) (step 204) includes gathering / obtaining all the data from the various sources. As mentioned above, some data may be provided by/ received from the requester (e.g. uploading, emailing documents etc. from the previous stage). Some data may be available via online sources that are open to the public (e.g. Land Registry in the UK, a Title Company in the US, property valuation services etc.) and still further data may be available online using user credentials (e.g. user account username and password etc.) and still other data sources require the consent of the loan requester (personal credit check). The system gathers data from the aforementioned sources either by importing the data and extracting the information or by parsing (or using other forms of data extraction) the data at the source.

The third stage (Processing Data) (step **206**) includes the stage wherein the lender considers the application in an automated process resulting in a decision. The process includes an 'affordability and risk assessment algorithm (ARAA)' which includes one or more algorithms and/or rules for processing / analyzing the data in order to provide an assessment vis-à-vis the requested loan. The ARAA determines the affordability of the requester and the real estate net worth of the majority shareholders/directors of the requestor. This stage also includes cross-referencing the information provided by the requester in the application as well as fraud prevention through verification of requester through several data points which are collected digitally and online. Each of these points is discussed at length elsewhere.

The decision or conclusion of the process can either be a rejection, approval, or a deferral to a human underwriter or loan officer. In step **208** the loan request is either approved or not. If the loan request is not approved then in step **210** the loan request is either denied or not. If the decision or outcome of the assessment process is to deny the request, then in most cases the application will be rejected immediately in step **212.** The final decision may be automatic or only after a human (e.g. underwriter) signs off on the decision (not shown). In some embodiments, the underwriter may have an override capability to allow a loan which the ARAA concluded should be denied (in step **210**).

If the decision is neither to approve the application (at step **208**) nor to deny the application (at step **210**) then the assessment/ decision is deferred to an underwriter in step **214** to make the determination. The next stage (step **216**) is for the underwriter to make the determination of whether to approve, deny, or request additional information from the Loan requester. If the underwriter/ loan officer decides not to approve the loan, then the loan is denied in step **212.** In some embodiments, the system can provide one or more alternative loan options that would be acceptable. In other embodiments, if the loan is denied there is no recourse.

In the event of an approval, whether as an outcome of the automated process in step **208** or the human determination in step **216,** the lender offers the requester a loan amount in step **218.** The requester chooses how much of the offered amount to draw down. The selection is received in step **220.** In step **222** the loan requester electronically signs a loan agreement, provides debit card details (in other embodiments, other sources of payment may be used) and agrees to an automated billing schedule. Finally, in step **224** the funds are transferred. In some embodiments, the automated process only makes a recommendation, whereas the decision is always made by a person (e.g. step 208 to step 214 instead of step 218; or step 210 to step 214 instead of step 212).

In some embodiments, the system arranges all the relevant information gathered from the various sources on an innovative dashboard which is designed to give the underwriter a high level view of the applicant. The dashboard further allows the underwriter to drill down to more specific and detailed information at the click of a button. The dashboard configuration allows the underwriter to make a fast decision regarding the loan since all the data is presented in a concise, efficient and visually pleasing manner.

In some embodiments, the online process includes a monitoring stage (step **226**), once the loan has been approved and the funds transferred. In some embodiments, the system monitors the requester business by applying algorithms to analyze the business performance in real time using the electronic accounts linked to the system. Access to the business data on an ongoing basis enables the system to forecast future re-payments or cash flow problems, allowing for a pro-active approach to lending (e.g. offering additional loans when a cash flow problem is predicted or evident).

In some embodiments, the loan can be a secured loan. For example, if the borrower defaults on the loan, the lender can write a charge on a company (in the UK for invoices financing or factoring, floating or fixed), or a UCC (Uniform Commercial Code) filing (in the USA). In still other embodiments, the loan can be secured against property (either property belonging to the company or to the directors / shareholders of the company). A personal loan can also be a secured loan. Making the loan a secured loan can either be done electronically as part of the process of approving and lending, or can be done at a later stage (i.e. manually) by the lender.

### ONLINE APPLICATION - STAGE 1

The first three stages are now discussed in greater detail. The Online Application (stage one) is discussed below with reference to various screen shots taken from an exemplary embodiment of the online application. The exemplary Online Application includes four steps or stages. In step/stage one (1) of the online application, the requester creates a user account with a username and password.

In step two (2) of the process, the Requester provides personal information including: name, address, date of birth, home ownership and contact details etc. The address is verified and cross-checked with the credit bureau. As discussed elsewhere, the preferred type of loan is an unsecured loan with a personal guarantee. The lender assesses the net worth of the loan requester by checking what assets the requester has. In addition, the net worth of the majority shareholders/directors may also be calculated. The valuation of the personal property of the shareholders and/or directors is looked up and cross checked to ascertain whether or to what degree the property is free of liens and charges.

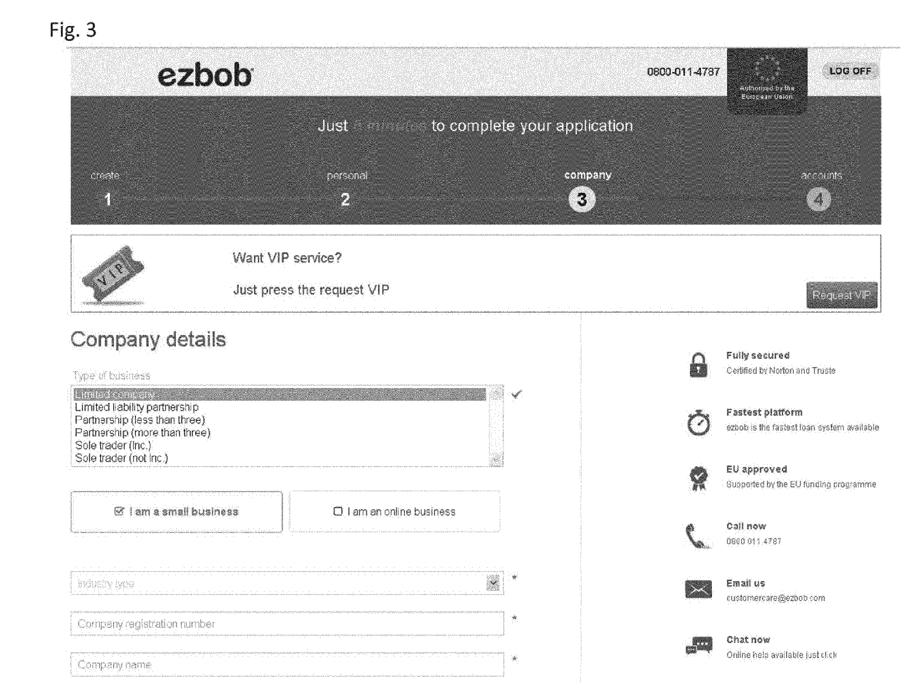

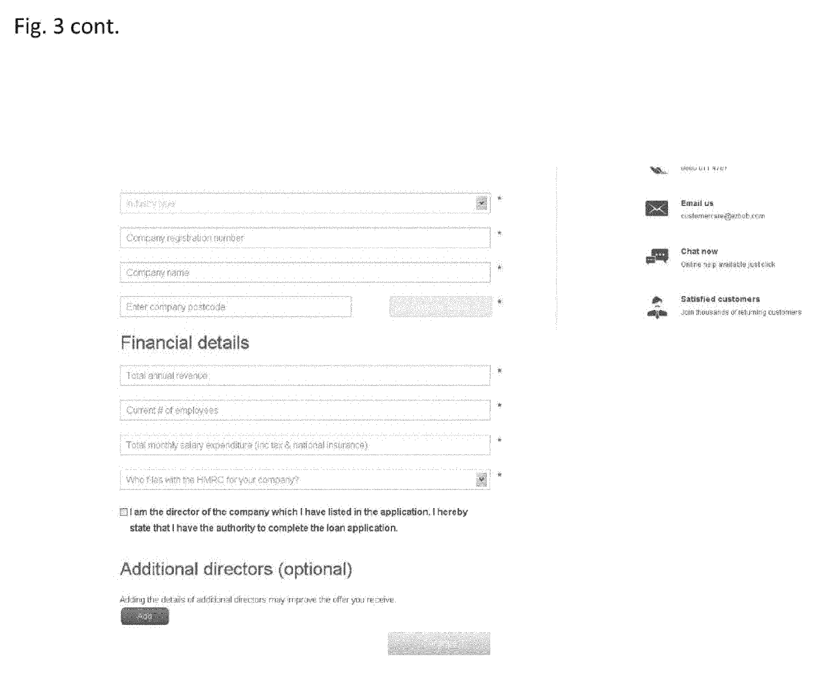

In step three (3) the requester provides Company Details of the business (primarily SMBs but may be applicable for other types of businesses or individuals as well). Figure 3 is a screen shot of an exemplary page of an online form relating to Company Details. The exemplary application page includes fields relating to the type of business (corporation, limited company, partnership, sole proprietorship, etc.), type of industry, the company or tax identification number, company name, and the registered address of the business.

Furthermore, the exemplary application includes data fields for providing basic financial data regarding the business: total annual revenue, number of employees, salary expenditure and other details. Lastly the application page includes fields for the name or names and home addresses of directors of the business. Other directors may also provide the personal guarantee for the loan. The application details are cross-referenced, online and in real time, to verify authenticity and legitimacy of the loan applicant (e.g. the details are cross-referenced with the credit bureau, bank account, tax payment and/or any other data source provided/linked in a later step).

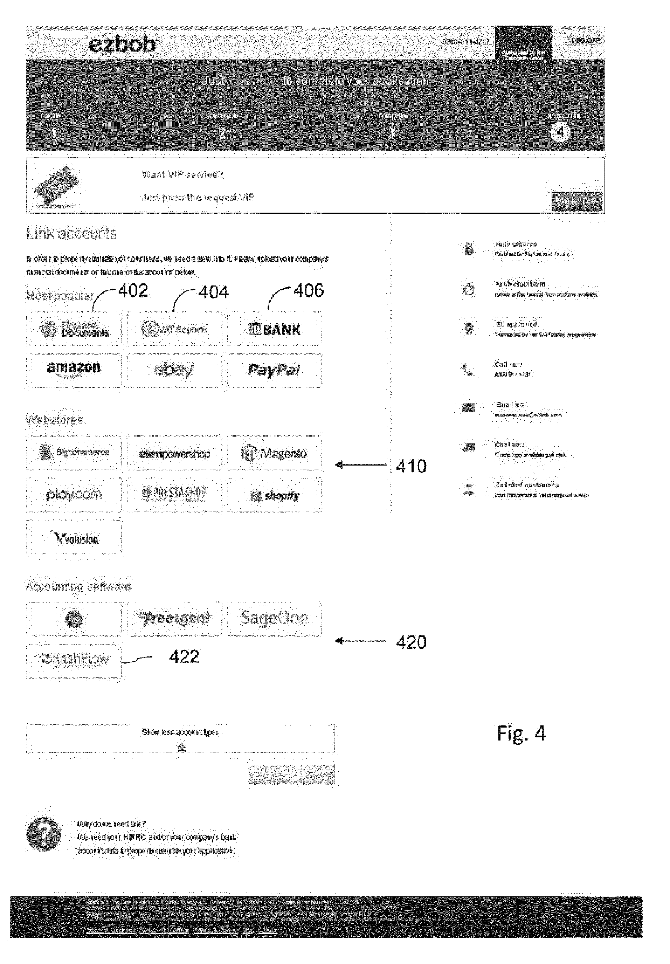

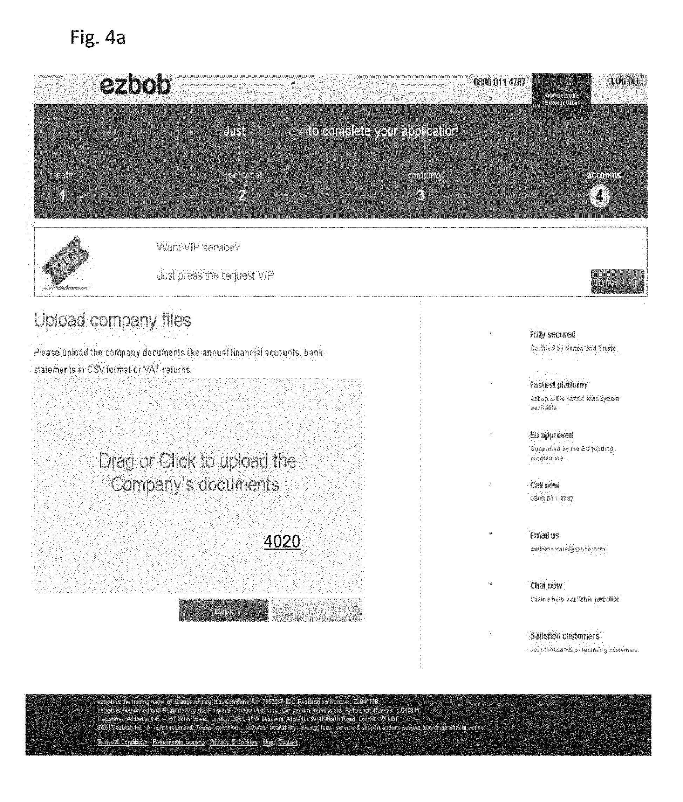

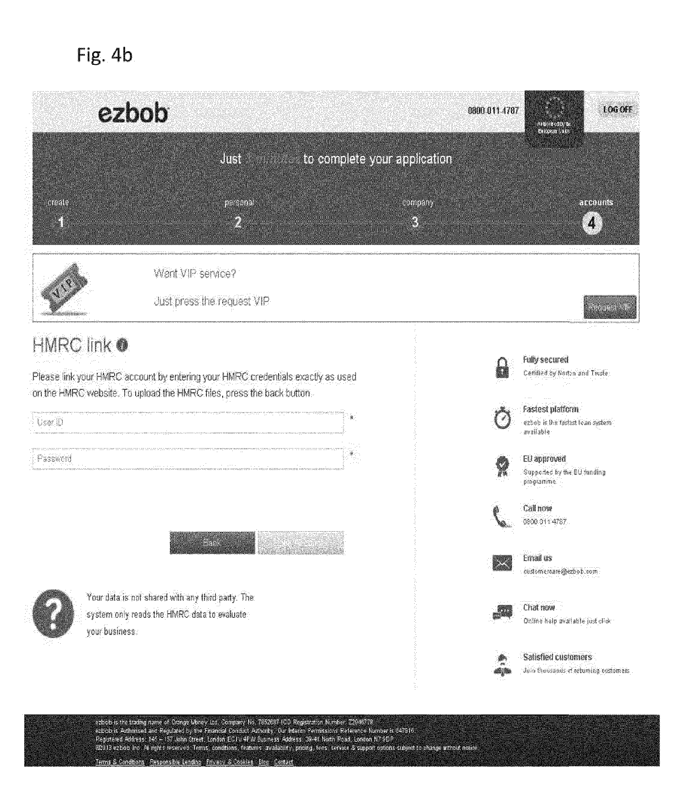

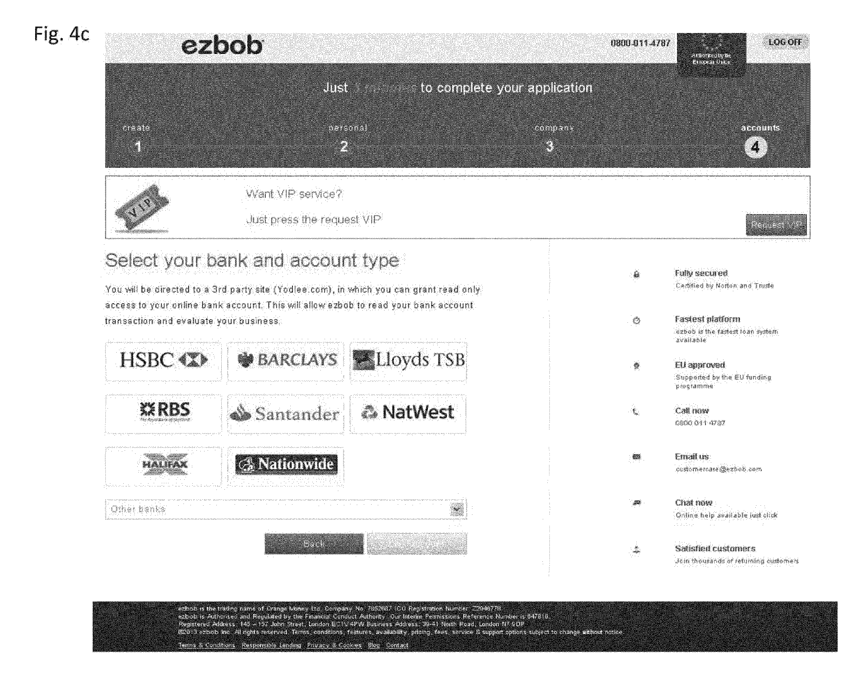

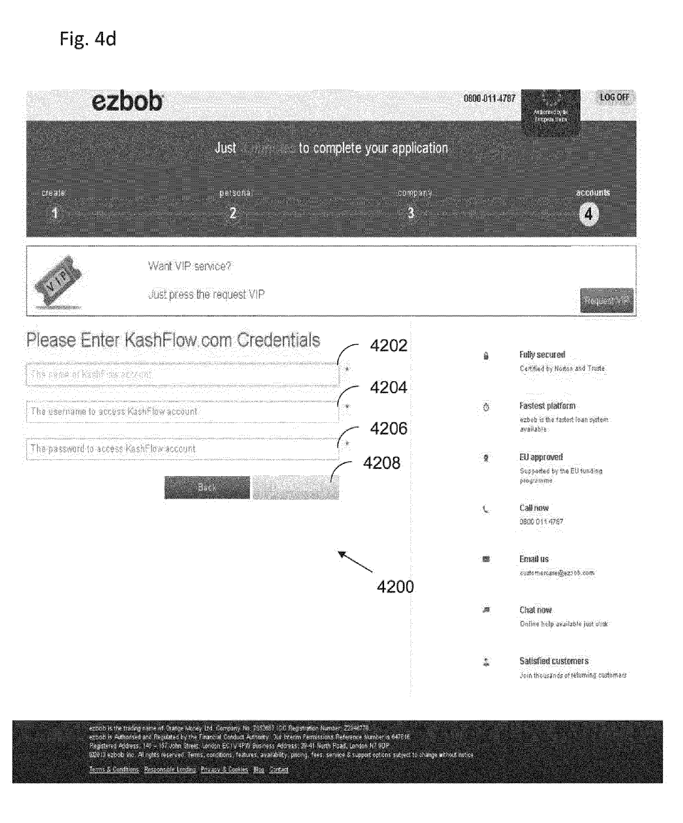

The fourth (4) and final step of the Online Application is described with reference to screen shots of an exemplary online application. Figure 4 is a screen shot of an exemplary page of an exemplary online application form. Fig. 4 depicts a screen shot of page that allows a requester to provide access data and/or financial data to the system. The system generally gathers information in one of three ways: (a) extracting data from uploaded documents, (b) 'pulling' information from a remote/online source and (c) keying-in information.

The first way to provide information is by uploading actual financial documents to the system. The requester can provide (upload) actual documentation such as copies of bank records, tax filings, existing loans, issued invoices, invoices due, liens on property and the like by pressing on button **402** labeled Financial Documents. Figure 4a is a screen shot of a document upload page of the online form. When the Financial Documents button **402** is pressed, the browser opens a new window, the screen shot of which is depicted in Fig. 4a. Fig. 4a includes a document intake area **4020** where the user can select a document or 'drag-and-drop' the document from a folder on computer into the intake area. The exemplary web-page includes instructions that the documents should be in CSV file format or tax filings which are in a known and standardized format.

The second way to provide information to the system is to provide an 'electronic link' to the various online financial accounts. In some cases usernames and passwords etc. must be provided where applicable. As mentioned elsewhere, 'access data' includes account numbers or names, usernames, passwords etc. that allow the system to gain access or to be 'linked' to various online accounts. Once linked to an account, the system can 'pull' information from that resource. In some embodiments the loan requester provides the system with a token which provides similar accessibility as described above.

The third method for providing the system with information is by manually entering or keying-in the information. For example, the requester may send an email or convey the data over the phone which the loan officer then manually enters into the system. The third method is the least efficient method which is prone to the most problems, some of which have been discussed above.

In order for the system to calculate the amount of funding and the terms to make available to the requestor, the system uses at least two major sources for information: bank account information and tax filings. In some situations, the requester can only upload documents from one or both of the aforementioned resources. In some preferred embodiments, the requester can link one or both of the aforementioned resources to the system. In some embodiments the requester can email the aforementioned to the lender. Bank accounts, tax filings and additional financial resources that can be linked to the system will now be discussed in greater depth with reference to Figs. 4, 4b, 4c and 4d. Figure 4b is a screen-shot of a 'VAT Reports' page of the exemplary online application form. Figure 4c is a screen-shot of a 'bank and account type' web-page. Figure 4d is a screen shot of a 'KashFlow.com credentials' webpage.

### TAX and VAT

In some regions, the local/national tax authority provides an online tax system where a business or individual can register an online account. In other regions online tax systems with online accounts are not available.

One example of a region that provides online service accounts for tax is England. In England, a great majority of businesses file their accounts with the tax authorities electronically. Such businesses file VAT (Value Added Tax) reports using the HMRC (Her Majesty's Revenue and Customs) Online Service Account. It is made clear that the HMRC is merely an example of an online tax account and not intended to be limiting in any way. Referring to Fig. 4 of the exemplary online application, the requestor clicks on a 'VAT reports' button **404** in order to link the system to the requestor VAT account. Upon clicking the VAT button, the browser loads a web-page linked to the button, a screen shot of which is depicted in Fig. 4b. The requester provides the company user ID and password ('access data') to the system which is then able to locate and extract (using any relevant method known in the art such as screen capture, accessing database etc.) any pertinent information from the online account (i.e. the system 'pulls' the information from the online VAT account).

In other embodiments, where an online tax account is not available or not provided, the requester can upload tax forms to the system as discussed above with reference to Figs. 4 and 4a.

### BANK

If a loan requester has an online bank account the bank account provides all the historical account details and can be linked to the system in a similar manner to the tax account. The 'link page' of Fig. 4 provides a 'Bank' button **406** for the user to link the business bank account to the system. After clicking on the Bank button **406,** the system loads webpage of Fig. 4c. Third party services are known in the art that provide 'read-only' information regarding bank accounts and other financial data sources.

For example, Yodlee™ is an account aggregation service that is used by personal finance tools such as Money Dashboard in the UK and Mint in the US which allows users to link credit cards, bank accounts, investment accounts, travel reward accounts, etc. on to an online dashboard for personal use. Each data source that the loan requester chooses to link requires him/her to provide the specific access details through the Yodlee™ server (or any other similar service) which the system can then automatically access. Exemplarily, as detailed on the web-page of Fig. 4c, once the user selects a bank, the browser will be directed to a Yodlee.com website (not shown) for the user to provide the user account credentials. It is clear that the use of Yodlee™ is merely a preference (and therefore exemplary in nature) and any other similar service can be used in place thereof.

The online application allows the requester to link various other accounts and services. As the system is automated, more information sources does not increase the processing time of the application in any significant way (as opposed to a human process where more data equals more time, hours and days, to gather, review and analyze).

One example is provided below, although it is made clear that the example is provided merely to demonstrate potential uses of the system. Exemplarily, the system further allows for linking to online webstores **410** and accounting software **420.** For example, if the user has a KashFlow.com account, that account can be linked to the system. The user clicks on a 'KashFlow' button **422** which causes the browser to load the webpage shown as a screen shot in Figure 4d. The credentials area **4200** includes three fields that the user must complete in order to link the KashFlow account to the system. Account name field **4202** is first, then the username field **4204** and lastly the password field **4206.** Once all three fields have been filled in the 'Link Account' button **4208** becomes clickable and the user can then link the KashFlow account to the system. This allows the system to cross reference additional data points as well as access outstanding invoices, bills payable, number of loan requester customer base. A similar procedure can be performed for any of the exemplary services / stores featured on the webpage of Fig. 4. Of course, the represented services / websites, etc. are merely exemplary and it is understood that other services, websites, etc. can appear instead of, or in addition to, the exemplary displayed entities.

### GATHERING DATA - STAGE 2

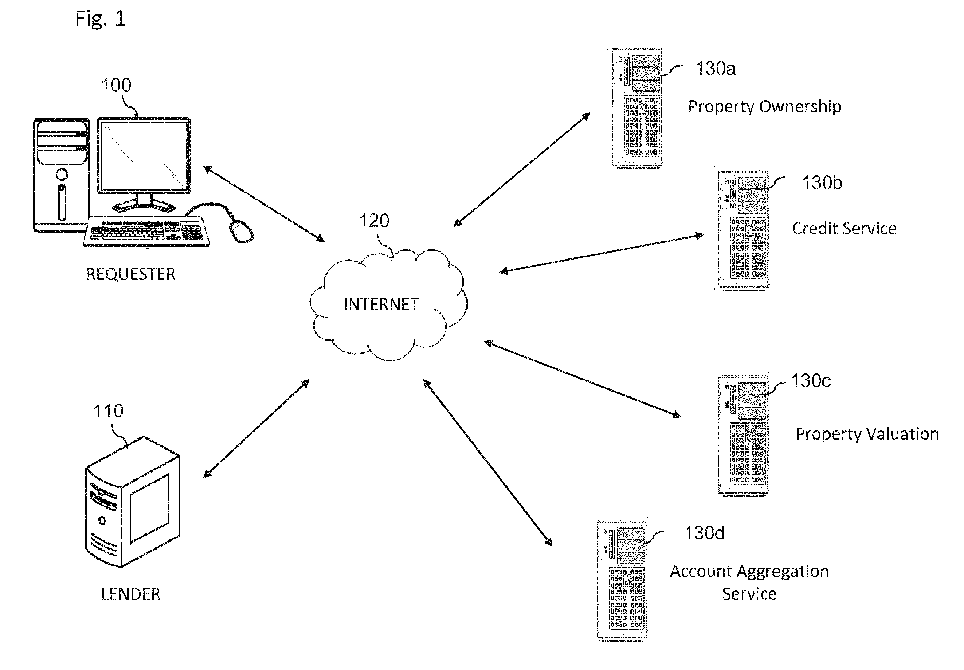

The innovative system of the immediate invention gathers data based on the information provided by the requester in the online application. Figure 1 is a block diagram depicting various entities on a network. A Requester **100** sends an application over a network (e.g. Internet) **120** to the Lender computer/ server(s) **110.** The lender computer accesses various databases and services **130** online via the network in order to extract required information.

For example, in steps two (2) and three (3) of the online application, the requester provides personal and business information which is checked, cross-referenced and verified, preferably in real time. Furthermore, the information can be used in stage 3 to calculate the worth of a property when calculating the value of a personal guarantee of the loan requester (directors/stakeholders), for example, or for other reasons discussed below.

An exemplary group of online services/ websites/ databases are depicted in Fig. 1. A property ownership online service **130a** (usually government run) provides, at least, verification of property ownership, the loan requestor's purchase price as well as liens and charges against the property, if any exist. A credit bureau service **130b** provides amongst other information details of outstanding mortgages, for example, of the directors/shareholders of the Loan Requestor. A property valuation site/ service/ resource **130c** provides the value of a property. The three aforementioned resources, taken in combination, provide an instant view of the real estate net value of the loan requester(s) property (or properties).

A bank account aggregation service **130d** provides a read-only view of the bank account name and transactional history of the loan requestor. In some embodiments, the system not only provides a view of bank account activity, credit card activity etc. but also an 'analysis and monitoring' ability to identify in real time, among other things: i. receipt / disbursement data and trends (e.g., total per month, average per month, number of transactions), ii. abnormal transactions (e.g., shareholders withdrawals, borrowing from certain lenders, gambling, etc.), iii. additional key performance indicators about the business and its credit worthiness. Detailed examples are discussed below. The lender computer extracts/ retrieves/ accesses the desired data, processes the data and provides a recommendation regarding the loan. Additional or alternative resources may be used in addition to or in place of the resources discussed above. In the current stage, the system gathers all pertinent information from the various sources. It is made clear that the stage of gathering information may happen concurrently while the requester is filling out the online application or thereafter or both.

Data provided in step four (4) of the online application is used to gather/extract up-to-date financial information for processing in stage 3. As mentioned above, the system primarily 'pulls' data from a remote source or extracts data from uploaded documents. Data can be extracted from the remote source or from a document that has been imported from a remote source.

For example, the system includes detailed algorithms for recognizing the type of information in a particular document or data source and enables the system to parse the data or scan the document in order to extract the necessary information. For example, the system can recognize a specific tax form (that was uploaded in digital form, scanned in from a paper source or captured from a remote database, etc.) and extract the necessary data from the form. As a general rule, financial documents have a set format for each region. In some countries, such as in the USA, separate tax forms can be provided by the applicant who receives the data from an accountant who usually has a hardcopy or digital copy on file. The paper form or scanned copy can be uploaded to the system. The system recognizes the form and extracts the necessary data from the form. Exactly what information is extracted from the tax form is discussed elsewhere. In a similar fashion, the algorithms are able to extract relevant data related to bank account details and/or any other source of information.

### Example

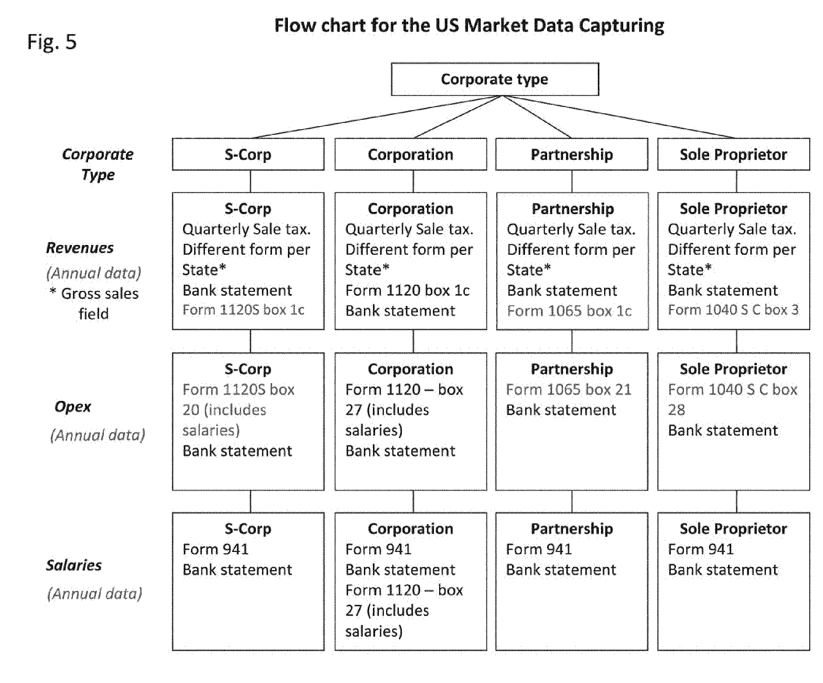

Figure 5 is a flow chart of data capture per corporation type, in the US, which is merely an exemplary region. Four types of corporations are listed in the chart, and for each corporation type, details of the data sets that need to be captured are listed. For each type of corporation, data regarding revenues, operational expenditure (OPEX) and salaries are detailed in the chart. For example, in the U.S.A., IRS form 1120, box 27 gives the operating expenditure (OPEX) of a corporation including salaries. When a requester uploads this form (or any other regulated or standardized form or document), the system scans the form, recognizes the type of form and extracts the necessary information from the form (e.g. the amount entered in box 27 above). For each region, the relevant financial form or document can be recognized by the system and the required information extracted. If the system cannot read the document for some reason, then the data can be entered (keyed-in) and checked manually.

### PROCESSING DATA - STAGE 3

In the third stage, the data gathered in stage two is cross-referenced, verified and processed. When processing the data, there are four main issues that are addressed. (1) The lender must assess whether the requester can afford (i.e. has the ability to repay) the loan. (2) The lender needs a personal guarantee for an unsecured loan. Therefore the lender needs to assess the net worth of the requester and/or other stakeholders who can provide a personal guarantee. (3) With all loans there is a probability of default. The lender should assess the Probability Default (PD) of the loan. (4) Fraud is a major concern with all money related issues, especially when the process happens online. Therefore the lender should cross-reference and verify all the data provided by the requester.

### ASSESS AFORDABILITY

With all loans, the lender needs to determine the ability of the requester to service all outstanding debts and to repay the loan. To this end the lender needs to determine the free cash flow of the requester. One preferred method of calculating free cash flow is by analyzing the expenditures from the previous year (non-typical expenditures such as acquiring machinery - which happen one time only or once in a number of years - are removed from the calculation) vis-à-vis current debt and payroll. An analysis of the tax filing (e.g. VAT filings) provides the system at least the capital expenditure (CapEx) for the previous year. Payroll is reported in some tax filings. In other regions, payroll is not reported directly but can be calculated based on taxes paid that relate directly to the payroll. Additional data that can be extracted from company tax data (in some cases going back many months) includes, but is not limited to: revenues, late submissions, partial payments and fines, and payroll benchmarking.

Bank statements can also be automatically analyzed. Data is cross-checked and verified between different sources such as bank statements and tax filings. Furthermore, the innovative system can access ongoing tax filings (not just the last yearly tax filing which is up to 12 months old) and Tax Advances which are calculated based on expected net income which are paid three or four times a year. In some instances or in some regions or for some corporation types, a profit and loss analysis is made and based on that analysis, the business pays the tax advance.

Referring back to Fig. 5, the chart provides exemplary sources of data used per corporation type. Taking the example of a 'Corporation' (second column of boxes from the left), the system captures the quarterly sales tax (which is reported on a different form for each state) from the "Gross sales" field of the form (e.g. form 1120 box 1c) and scans the bank statement (e.g. incoming payments) to calculate annual revenue. To calculate the Operational expenditure (OPEX), box 27 of tax form 1120 provides that information, but includes payments for salaries. Salaries are reported on Form 941. The bank statement shows outgoing payments each month which correlate to the payments of salaries. OPEX can now be assessed with and without salaries. Other examples of US corporations are similarly provided in the table.

In some embodiments, the Processing Algorithm of the system includes accounting systems that provide at least some of, but not limited to, the following features: (a) Data completeness - i.e., running certain automatic procedures which mirror basic procedures a human auditor would perform including the verification of: i. expenses completeness, ii. bank reconciliation, iii. internal reconciliation of control/balance-sheet accounts (receivables and payables - e.g., customers, vendors, employees, tax authorities), iv. certain balances/transactions identity to / correspondence with external references (e.g., banks, tax authorities) that verifies the material transactions were recorded; (b) Revenue analysis (e.g. trends, seasonality); (c) Profitability; (d) Assets and Liabilities; and (e) related party transactions (e.g. by running the receivables through an Experian Data system module).

### ASSESS / PERSONAL GUARANTEE

In one preferred embodiment, the lender provides an unsecured loan with a personal guarantee. At least in the aforementioned embodiment, the net worth of the requester must be determined in case the requester does not repay the loan and the lender is required to go to court and put a charge on the assets belonging to the loan requester / directors / majority shareholders.

The director(s) and/or shareholders provide addresses of primary residence and details of home ownership and net home equity that can be used when calculating the value of a personal guarantee for a loan. The net worth of the director or shareholders is calculated based on the worth of the property excluding outstanding mortgages and/or liens, as discussed above with reference to Fig. 1. With a personal guarantee, if all else fails there is recourse against the personal property of the guarantor, therefore it is necessary to work out the net worth of the property in order to calculate the amount of funding that can be extended to the requester (and covered by the personal guarantee). Verification of property ownership, the purchase price of the property as well as liens and charges against the property, are received from the Land Registry (or similar service). A credit bureau service provides details of outstanding mortgages and a property valuation site provides the value of a property. The three aforementioned resources, taken in combination, provide an instant view of the real estate net value of the loan requester(s) property (or properties).

### PROBABILITY DEFAULT

Probability of default (PD) is the financial term describing the likelihood of a default over a particular time horizon. The PD provides an estimate of the likelihood that a borrower will be unable to meet debt obligations.

### ANTI-FRAUD / VERIFICATION

Numerous data is cross-referenced and verified by the system. Some of the anti-fraud and verification processes are now discussed briefly. The company details provided by the requester are cross-checked with the credit bureau, government databases (land registry, Companies House) tax filings, and bank accounts. In other regions other databases may be available. Shareholder details are cross-checked with the credit bureau and/or government/state databases. Other methods of verification, cross-checking and cross-referencing are mentioned elsewhere in the document. Verification/cross-checking can be done in real-time while the requester fills out the online application, or immediately thereafter.

### UK EXAMPLE

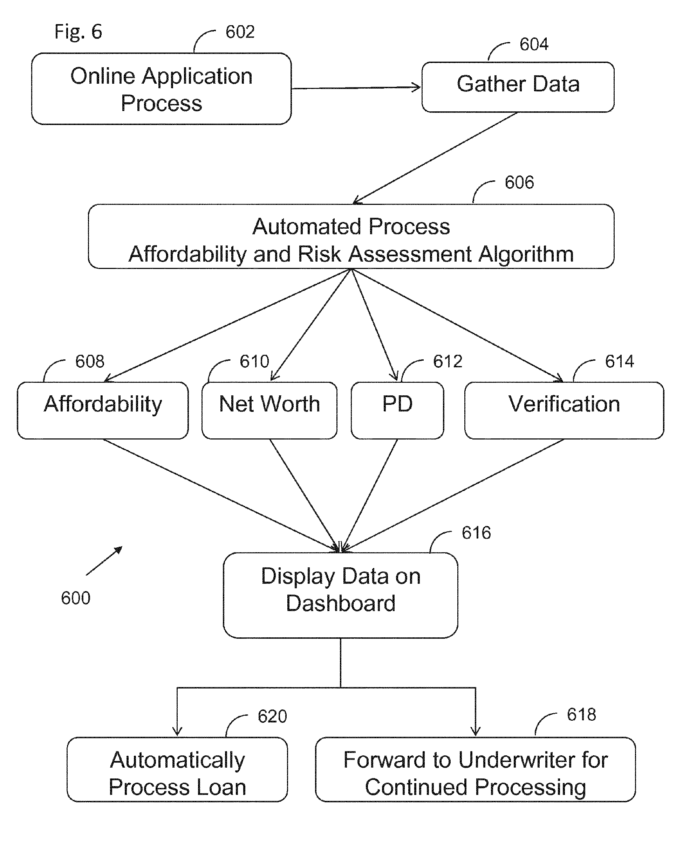

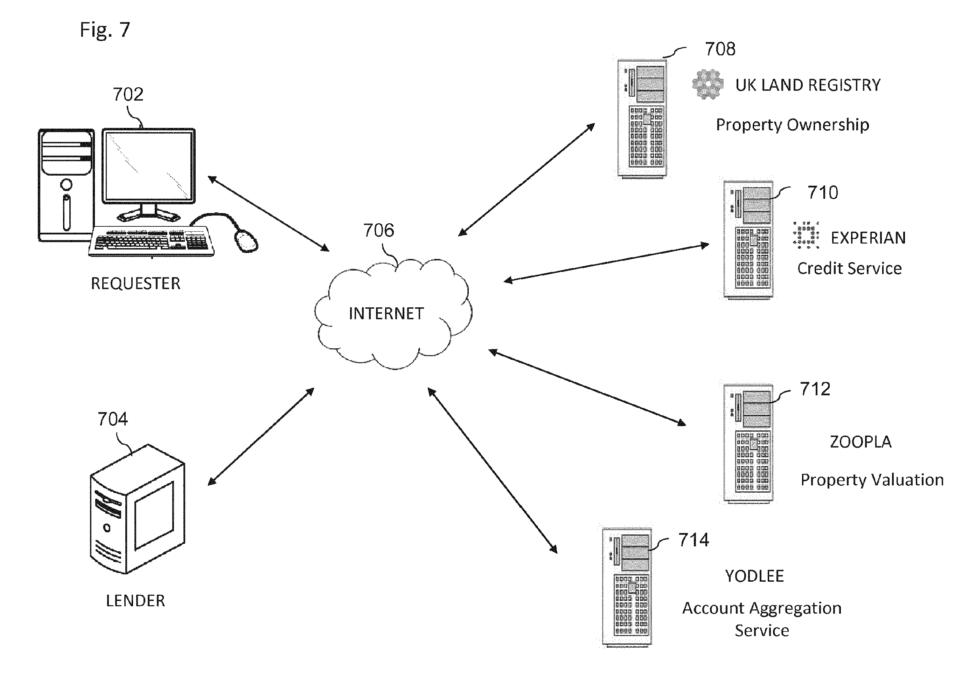

Figure 6 is a flow diagram of an exemplary loan consideration high level process **600.** Figure 7 is a block diagram similar to Fig. 1 depicting various named entities on a network. Reference is made both to Figs. 6 and 7 concurrently. In step **602** a requester **702** fills out the application, in this case, an online application. All data transactions are over a data communications network such as the Internet **706.** A lender system **704** receives the application data and in step **604** gathers the desired information from various sources and resources (online or uploaded). The system parses all the data and forms and extracts the necessary/ relevant information. In step **606** the system begins the affordability and risk assessment process.

In steps **608 - 614** the system assesses requester eligibility for a loan as discussed above. For example, when assessing affordability (step **608**) the system/algorithm/process verifies historical operational performance of the business (or individual) and helps assess the repayment ability of the requester. Exemplarily, the assessment can further be based on an internal credit scoring system. The credit scoring system is a set of rules and algorithms that process specific pieces of data gleaned or parsed from the online sources or uploaded data.

The aforementioned analysis can also provide an improved Accounts (trade) receivable analysis and ability to offer real-time factoring / invoice-financing (as the identity of the customer and nature of commercial relationship can be instantly verified based on past accounting records). By accessing the accounting system (e.g. Kashflow, Sage, Intuit, Xero, FreeAgent, etc.) electronically, the system is able to see all open/issued invoices. The system can conduct a credit search through the credit bureau on the company which is due to pay the invoice to find its credit worthiness. In addition, the system can cross reference the name of the company to analyze if the company is a related party transaction. The same goes for real time factoring.

In step **610** the net worth of the requester and/or directors and shareholders are calculated, e.g. for the purposes of a personal guarantee. The system is further linked to a Land Registry and/or property valuation site which provides a near instant view of the net value of the requester property, by combining three different data sources: Exemplarily UK Land Registry resource/ site **708** (property ownership, charges and historical price, liens against property), a property value resource (e.g. Zoopla in the UK, Zillow in the US, Property Value and On the House in Australia, Zoocasa in Australia, and so forth in each independent country) **712** and a resource regarding outstanding mortgages (e.g. Experian) **710.**

In step **612** the PD is calculated and further included in the calculation of the repayment terms. In step **614** the various pieces of information are verified and cross-referenced in order to prevent fraud. It is made to be understood that one or more of steps **608-614** can be made in an order other than the exemplarily order described above. Furthermore, one or more of the aforementioned steps may take place substantially simultaneously with one or more other step mentioned heretofore.

In step **616** all the details are presented on the system dashboard in a clear and concise manner. The underwriter is able to view high level data and drill down to specifics at the touch of a button or two. In step **618** the underwriter continues the loan consideration process as detailed above with reference to Fig. 2. In addition, the information from the above in whole or in part can be used to determine the amount of funds offered to the requestor as well as the terms offered, including but not limited to: cost of the funds (interest), length of the loan term, and type of loan (equal repayment loan, interest only loan, loan with a grace period etc) all set in a proposal.

In an alternative embodiment the loan life-cycle - from Origination, and through Data Collection, Processing / Analysis, Loan Offer, Loan Activation and Collection - is implemented in an automated process, completely, by the lender system. In the fully-automated implementation, data is presented on an internal dashboard in step **616** and automatically processed by the system (i.e. without the need for human intervention) in step **620** which includes at least steps substantially parallel to steps **218-224** or **226.**

With a conventional loan, once a loan has been granted the lender typically requires the borrower to update the lender on the business activities according to the loan pre-conditions. Typically an update is provided by the loan requester manually on a quarterly, semi-annual, or yearly basis and is again based on information provided by the borrower which may be incorrect or biased information.

In addition to the instant and broadest view of requester data, the immediate system provides unprecedented monitoring capabilities (see step **222** in Fig. 2) which offers almost real time visibility on financial operations of a business, alert to problematic situations so they can be discussed with business in real time, reduce losses and identify new lending opportunities. The assessment procedure or part thereof (e.g. extracting tax information from the tax authorities, accounting data, bank account data) can be repeated on a regular basis during the life of the loan, for example, every three months, so as to closely monitor the requester's financial situation and update the risk assessment of the client.

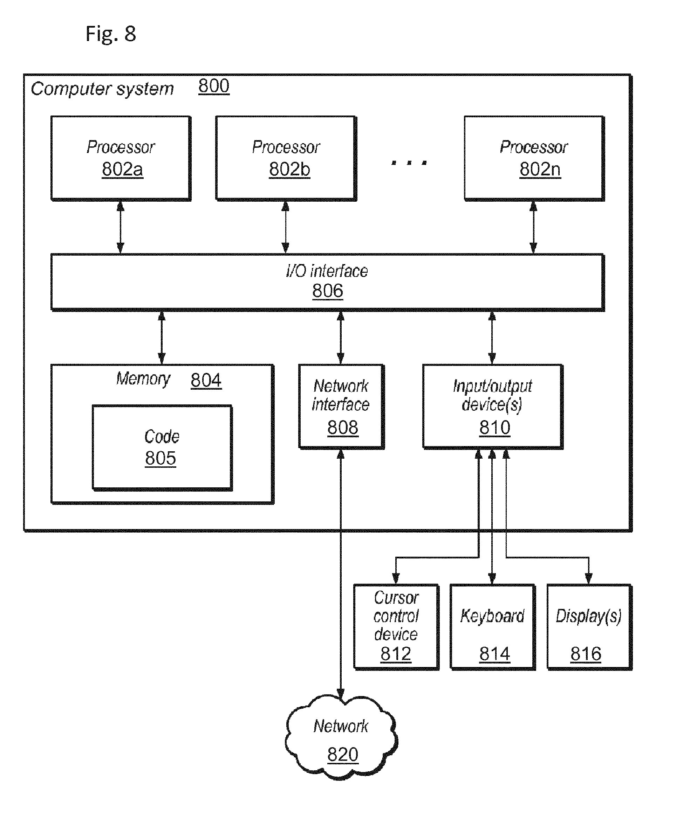

Figure 8 is a block diagram illustrating components needed to implement a digital computer that can be used to implement the methods described herein, according to an embodiment. The computer can be for example, a server, a database, personal computer, cellular phone, tablet, any portable computing device, etc.

In the illustrated embodiment, computer system **800** includes one or more processors **802** coupled to a system memory **804** via an input/output (I/O) interface **806.** Computer system **800** further includes a network interface **808** coupled to I/O interface **806.** In various embodiments, computer system **800** may be a uniprocessor system including one processor **802,** or a multiprocessor system including several processors **802** (e.g., two, four, eight, or another suitable number). Processors **802** may be any suitable processor capable of executing instructions.

System memory **804** may be configured to store instructions and data accessible by processor **802.** In various embodiments, system memory **804** may be implemented using any suitable memory technology, such as static random access memory (SRAM), synchronous dynamic RAM (SDRAM), nonvolatile/Flash-type memory, or any other type of memory. In the illustrated embodiment, instructions and data implementing desired functions, methods or techniques, such as those described above and below, are shown stored within system memory **804** as code or modules **805.** It is noted that in some embodiments, code / modules **805** may include instructions and data implementing desired functions that are not directly executable by processor **802** but are represented or encoded in an abstract form that is translatable to instructions that are directly executable by processor **802.**

In one embodiment, I/O interface **806** may be configured to coordinate I/O traffic between processor **802,** system memory **804,** and any peripheral devices in the device, including network interface **808** or other peripheral interfaces. In some embodiments, I/O interface **806** may perform any necessary protocol, timing or other data transformations to convert data signals from one component (e.g., system memory **804**) into a format suitable for use by another component (e.g., processor **802**). In some embodiments, I/O interface **806** may include support for devices attached through various types of peripheral buses, such as a variant of the Peripheral Component Interconnect (PCI) bus standard or the Universal Serial Bus (USB) standard, for example. In some embodiments, the I/O interface **806** may be coupled to an Input/Output device interface **810.** Input/output device interface may be couples to peripheral devices, such as cursor control device **812** (e.g. a mouse, pointing device etc.), a keyboard **814,** one or more displays **816** and other devices known in the art. In some embodiments some or all of the functionality of I/O interface **806,** such as an interface to system memory **804,** may be incorporated directly into processor **802.** In some embodiments some or all of the functionality of Input/output device interface **810,** such as an interface to cursor control device **814,** display **816,** keyboard **814** may be incorporated directly into computer system **800** and controlled by processor **802** (e.g. in a touch screen device such as a smartphone or tablet computer).

Network interface **808** may be configured to allow data to be exchanged between computer system **800** and other devices attached to a network **820** (*e.g*. such as depicted in Fig. 1 or 7), such as other computer systems, for example. In various embodiments, network interface **808** may support communication via wired or wireless general data networks.

In some embodiments, system memory **804** may be one embodiment of a computer-accessible / computer-readable storage medium configured to store instructions and data as described above. However, in other embodiments, instructions and/or data may be received, sent or stored upon different types of computer-accessible storage media. Generally speaking, a computer-accessible storage medium may include storage media or memory media such as magnetic or optical media, e.g., disk or CD/DVD-ROM coupled to computer system **800** via I/O interface **806.** A computer-accessible storage medium may also include any volatile or non-volatile storage media such as RAM (e.g. SDRAM, DDR SDRAM, RDRAM, SRAM, etc.), ROM, etc, that may be included in some embodiments of computer system **800** as system memory **804** or another type of memory. A computer-accessible storage medium may generally be accessible via transmission media or signals such as electrical, electromagnetic, or digital signals, conveyed via a communication medium such as a network and/or a wireless link, such as may be implemented via network interface **808.**

All methods described herein can be performed on one or more electronic processors and/or computers working with each other. These processors/computers can be in the same or different physical locations connected by any type of computer communications network.

All features of documents that are incorporated by reference can be combined without limitation with each other and with features described in the text fully set forth herein. Features described herein can be combined with any feature(s) in the documents incorporated by reference without limitation.

It is noted that the order of any of the operations described herein can be performed in any order. Any operation described herein can also be optional. All flowcharts herein are not intended to illustrate the only possible implementation, and modifications and deviations can be added which include any feature described herein or based on well-established principles. For example, while endless loops may be theoretically possible in some flowcharts, in reality such situations could be handled using common sense approaches. Any embodiments herein can also be stored in electronic form and programs and/or data for such can be stored on any type of computer readable storage medium (e.g. CD-ROM, DVD, disk, etc.)

The descriptions provided herein also include any hardware and/or software known in the art and needed to implement the operations described herein. All components illustrated herein may also optionally communicate with any other component (either illustrated/described herein or not described but known in the art).

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A method for implementing a loan life-cycle over a communications network, the method comprising the steps of:
(a) obtaining financial data regarding a loan requester from a plurality of digital media sources, said financial data including tax data;
(b) analyzing said financial data to make an affordability and risk assessment (AARA) for granting a loan to said loan requester, said AARA including calculating, at least from said tax data, a forecasted amount of unencumbered capital, to be available over at least a portion of a term of said loan, after capital expenditure and debt repayments are estimated; and
(c) deciding whether to grant said loan based on said AARA.

2. The method of claim 1, wherein said plurality of digital media sources includes an online tax authority source, wherein said financial data is gathered from said tax authority source by parsing data stored at said tax authority source.

3. The method of claim 2, wherein said online tax authority source includes an online tax authority user account belonging to said loan requested.

4. The method of claim 1, wherein said plurality of digital media sources includes scanned documents.

5. The method of claim 4, wherein said step of obtaining financial data includes extracting field-specific data from said scanned documents.

6. The method of claim 1, wherein said financial data includes data relating to a net worth of a property belonging to said loan requester.

7. The method of claim 6, wherein said data relating to said net worth of said property is obtained from an online property ownership service, an online credit service and an online property valuation service.

8. The method of claim 7, wherein said AARA includes calculating said net worth of said property at least by receiving a purchase price from said property ownership service, details of an outstanding mortgage from said online credit service and a value of said property from said online property valuation service.

9. The method of claim 8, wherein said AARA further includes calculating a loan amount to offer said loan requester based on said unencumbered capital and said net worth of said property,
wherein said net worth of said property is used to calculate the value of a personal guarantee for said loan.

10. The method of claim 1 further comprising the step of:
(d) displaying selected gathered and processed data on a dashboard, wherein said selected data includes at least a minimum amount of information needed to make a loan approval decision.

11. The method of claim 1, further comprising the step of:
(d) monitoring financial activity of said loan requester over at least said portion of said term of said loan, said monitoring including monitoring on an ongoing basis elements selected from the group including: bank account activity, said tax data and both said bank account activity and said tax data.

12. The method of claim 1, wherein said unencumbered capital is further calculated by forecasting operational expenditure over said at least portion of said term of said loan.

13. The method of claim 12, wherein said operational expenditure includes payroll.

14. A computer-implemented method for implementing a loan life-cycle over a communications network, the method comprising the steps of:
(a) obtaining financial data regarding a loan requester transmitted over the communications network from a plurality of digital media sources, said financial data including tax data;
(b) analyzing said financial data to make an affordability and risk assessment (AARA) for granting a loan to said loan requester, said AARA including calculating, at least from said tax data a forecasted amount of unencumbered capital, to be available over at least a portion of a term of said loan, after capital expenditure and debt repayments are estimated;
(c) deciding whether to grant said loan based on said AARA, and
at least said analyzing is performed by a processor.

15. The computer implemented method of claim 14, further comprising the steps of:
(d) offering a loan size;
(e) receiving a loan size selection;
(f) receiving an electronically signed loan agreement; and
(e) transferring funds electronically;
wherein all said method steps are performed automatically.
